# EUROPEAN PATENT APPLICATION

(11) **EP 0 812 849 A2**
(43) Date of publication of application: **17.12.1997**
(21) Application number: 97304160.1
(22) Date of filing: 13.06.1997
(51) Int. Cl.: C07F 7/08, C07F 7/12

(54) **Process for preparing allylic silane compounds**

(30) Priority: 13.06.1996 JP 152445/96
(71) Applicant: Dow Corning Asia, Ltd., Tokyo 100 (JP)
(72) Inventor: Sakurai, Hideki, 1-1-3, Marunouchi, Chiyoda-ku, Tokyo 100 (JP); Sanji, Takanobu, 1-1-3, Marunouchi, Chiyoda-ku, Tokyo 100 (JP); Watanabe, Masahiro, 1-1-3, Marunouchi, Chiyoda-ku, Tokyo 100 (JP)
(74) Representative: Lewin, John Harvey

(57) **Abstract**

A method for preparing an allylic silane compound of the formula AₘRₙSiCl₄₋ₙ₋ₘ is disclosed, said method comprising reacting
(A) a chlorosilane of the formula RₙSiCl₄₋ₙ with
(B) a halogenated allylic compound,
said reaction being carried out in an aprotic dipolar organic solvent in the presence of metallic zinc, wherein A represents an allylic group, R is independently selected from the group consisting of a hydrogen atom, saturated hydrocarbon group having 1 to 20 carbon atoms and an unsaturated hydrocarbon group having 1 to 20 carbon atoms , n is an integer having a value of 0 to 3 and m is an integer having a value of 1 to 4.

## Description

The present invention relates to a method for preparing allylic silane compounds which are industrially important as raw materials for the preparation of unsaturated functional silicones and as a raw materials in organic synthesis, involving the transition of various allylic groups.

Silane compounds having allyl groups, 1-methyl-2-propenyl groups or 2-methyl-2-propenyl groups are industrially important as unsaturated hydrocarbon-functional silane coupling agents and as monomers used during the introduction of unsaturated hydrocarbons into side chains or terminals of curable silicones. They also find application as raw materials for organic synthesis reactions, in which allyl groups are involved (for example, see E. W. Colvin, Silicon Reagents in Organic Synthesis, p. 31, Academic Press (1989)).

Generally, the following methods are known for preparing allyl-functional silane compounds. One method, which is based on a direct reaction of silicon metal and halogenated allyls, such as allyl chloride, is suitable for preparing allyl chlorosilanes, such as allyl trichlorosilane or diallyl dichlorosilane, and the like (United States Patent No. 5,338,876). Generally, this method is suitable for large-scale production and is not intended for small-scale preparations. In addition, selectivity and yield are lower in comparison with methyl or phenyl functional silanes. Further, this method cannot be used for the synthesis of allyl silane compounds having hydrocarbon groups other than allyl groups.

The second method is based on a reaction of allyl metal compounds, (e.g., allyl Grignard reagents, allyl lithium and the like), and chlorosilane compounds (C. Eaborn, Organosilicon Compounds p. 10, Butterworths, (1960)). This method is suitable for small-scale production of allyl silane compounds. Also, it is applicable to the synthesis of allyl silane compounds having hydrocarbon groups other than allyl groups. However, there are various problems. Hexadienes are easily generated as by-products in the preparation of allyl lithium and allyl Grignards because of Wurtz-type allyl group dimerization reaction. (New Course in Experimental Chemistry 12, p. 47, p.66, Maruzen Co., Ltd. (1987)). Therefore, the yield of allyl lithium, allyl Grignards and the like is low. Further, this is a highly dangerous process, using lithium, magnesium, and other metals with high flammability, and requiring ethers, tetrahydrofuran and other highly flammable solvents and the act of bringing the produced allyl lithium and allyl Grignards in contact with air causes a powerful exothermic reaction, making industrial handling extremely difficult. Also, sequential reactions are easily brought about in the process of the reaction of allyl lithium, allyl Grignards and chlorosilanes, and, therefore, selective synthesis of the specified allyl substitution products is extremely difficult and this method is not suitable for industrial production.

Also, as for methods of preparing organic functional silanes by using other organometallic compounds, there are methods that make use of organic zinc compounds and organic aluminum compounds (C. Eaborn, Organosilicon Compounds, p. 31, Butterworths, (1960)). However, generally speaking, in many cases these are derived from organometallic compounds such as organic mercury or organic magnesium (New Course in Experimental Chemistry 12, p. 271, p. 308, Maruzen Co., Ltd. (1987)), which is unsuitable for the preparation of allyl silane compounds because of price, toxicity, and other problems.

It is thus seen that prior art methods for preparing allyl silane compounds are fraught with numerous problems in terms of industrial production, they require flammable or ignitable solvents and reagents of high reactivity, such as allyl lithium, allyl magnesium compounds, or allyl zinc compounds and the like, and they have low product selectivity. The development of a safe method having improved yield and selectivity is desirable in view of the increased industrial importance of allyl silane compounds.

The authors of the present invention discovered a method of producing allylic group containing silanes with high yield under mild reaction conditions, wherein a chlorosilane compound is reacted with a halogenated allyl compound, a 3-halogeno-1-butene, or a 3-halogeno-2-methyl-1-propene in a dipolar aprotic organic solvent in the presence of metallic zinc.

The present invention has been disclosed in Japanese Patent Application Number Hei 08/152445, the full disclosure of which is hereby incorporated by reference.

The present invention relates to a method for preparing an allylic functional silane represented by the formula (i) below:

AₘRₙSiCl₄₋ₙ₋ₘ (i)

In formula (i), A is an allylic group selected from an allyl group, a 1-methyl-2-propenyl group, or a 2-methyl-2-propenyl group, R is independently selected from hydrogen or a saturated or unsaturated hydrocarbon groups with a carbon number from 1 to 20, m is an integer with a value of 1 to 4, n represents an integer having a value of 0 to 3 and (n + m) ≤4. This preparation is based on a reaction of (A) a chlorosilane and (B) a halogenated allylic compound in a dipolar aprotic organic solvent and in the presence of metallic zinc.

Chlorosilane (A) is a compound independently having, respectively, hydrogen atoms, saturated primary, secondary or tertiary, and preferably, primary hydrocarbon groups with a carbon number from 1 to 20, and preferably, with a carbon number from 1 to 10, and unsaturated hydrocarbon groups with a carbon number from 2 to 20 as substituents other than chloro groups.

Chlorosilane (A) is represented by the formula (ii)

RₙSiCl₄₋ₙ (ii)

wherein R and n have their previously defined meanings, and R can be the above-mentioned allylic group A of formula (i)

Specific chlorosilane compounds include methyl trichlorosilane, ethyl trichlorosilane, propyl trichlorosilane, butyl trichlorosilane, hexyl trichlorosilane, octyl trichlorosilane, decyl trichlorosilane, dodecyl trichlorosilane, stearyl trichlorosilane and other straight-chain alkylsubstituted trichlorosilanes; isopropyl trichlorosilane, t-butyl trichlorosilane and other trichlorosilanes having secondary or tertiary alkyl groups; phenyl trichlorosilanes, tolyl trichlorosilanes and other aryl trichlorosilanes; allymethyl dichlorosilane dimethyl dichlorosilane, ethyl methyl dichlorosilane, methyl vinyl dichlorosilane, allyl (methyl) dichlorosilane, methyl propyl dichlorosilane, methyl octyl dichlorosilane, methyl phenyl dichlorosilane, diethyl dichlorosilane, dipropyl dichlorosilane, diphenyl dichlorosilane and other dichlorosilanes, trimethyl chlorosilane, dimethyl ethyl chlorosilane, dimethyl vinyl chlorosilane, dimethyl phenyl chlorosilane, dimethyl octyl chlorosilane, methyl diphenyl chlorosilane, trimethyl chlorosilane, triethyl chlorosilane, triphenyl chlorosilane, allyldimethyl-chlorosilane, and other monochlorosilanes. Among them, methyl trichlorosilane, hexyl trichlorosilane, octyl trichlorosilane, decyl trichlorosilane, allyl (methyl) dichlorosilane, dimethyl dichlorosilane and trimethyl chlorosilane are preferable.

The halogenated allylic compound (B) which is reacted with the above described chlorosilane includes:, allyl chloride, allyl bromide, allyl iodide and other halogenated allyl functional compounds; 3-chloro-1-butene, 3-bromo-1-butene, 3-iodo-1-butene and other 3-halogeno-1-butenes; and 3-chloro-2-methyl-1-propene, 3-bromo-2-methyl-1-propene, 3-iodo-2-methyl-1-propene and other 3-halogeno-2-methyl-1-propenes.

Among aprotic dipolar organic solvents, 1,3-dimethyl-2-imidazolinone, or a mixed solvent containing it, is particularly preferable.

Fibrous zinc, granular zinc, zinc powder, or materials obtained by finely cutting plate porphyritic zinc can be used as metallic zinc in the present method.

The reaction is conducted by dissolving chlorosilane (A) in a dipolar aprotic organic solvent (or a mixture of a dipolar aprotic organic solvent and an aprotic organic solvent), stirring and heating a mixture obtained by adding zinc thereto, and adding a halogenated allylic compound (B), thereto in a dropwise manner. It is appropriate to conduct the reaction at a temperature of 30°C to 250°C, however, it is preferable to conduct it at a temperature of 60°C to 150°C, which meets important requirements, such as the requirement that the reaction time should not be excessively long, reaction control should be easy to perform, and that decomposition of the product should be unlikely to occur. The allyl silane compounds produced can be isolated from the reaction mixture directly by using distillation, however, isolation by distillation can also be performed after filtering off the unreacted metal or metal salts.

### Application Examples

The present invention is explained in detail by referring to application examples, but is not limited thereto.

In addition, ¹H-nmr, ¹³C{¹H}-nmr, ²⁹Si{¹H}-nmr in the descriptions of the characterization of the products in the examples shown below represent, respectively, proton nuclear magnetic resonance spectra, carbon 13 nuclear magnetic resonance spectra (proton decoupling), and silicon 29 nuclear magnetic resonance spectrum (proton decoupling). CDCl₃ represents heavy chloroform. S, d, t, m and br shown in parentheses in the representation of the proton nuclear magnetic resonance spectra data represent, respectively, singlets, doublets, triplets, multiplets and broad peaks. 1H, 2H, 3H and the like means, respectively, spectral intensity equivalent to 1, 2 and 3 protons. J designates the spin-spin coupling constant (unit: Hertz). As for the chemical shift of the nuclear magnetic resonance spectra, in proton NMR it is the value obtained with chloroform at 7.24 ppm, in carbon 13 NMR it is the value obtained with chloroform at 77 ppm, and in silicon 29 NMR it is the value obtained using tetramethyl silane as an external standard and setting it to 0 ppm. GC-MS represents gas chromatography-mass spectrometry, and GPC represents gel permeation chromatography.

The chlorosilane compounds used in the present application examples were commercially available compounds or compounds synthesized based on well-known methods.

### Application Example 1

### (Preparation of allyl (methyl) dichlorosilane)

After adding 100 mL of 1,3-dimethyl-2-imidazolinone, 13.0 g of zinc powder, and 29.4 g of methyl trichlorosilane to a 200-mL three-neck flask that had been subjected to a nitrogen purge and heating the mixture to 70°C, allyl chloride (15.0 g) was added in a dropwise manner over a period of 5 minutes. Upon termination of the dropwise addition, heating was conducted for another hour and the product was subjected to distillation under reduced pressure, obtaining allyl methyl dichlorosilane with a 69% yield.

Analytic results: allyl methyl dichlorosilane:
Colorless transparent liquid;
bp 45∼50°C/60 mmHg;
MS (70 eV) m/e (%) 156 (M⁺ +2, 6.9), 154 (M⁺, 9.8), 139 (1.8), 113 (100);
¹H-NMR (CDCl₃ δ) 0.76 (s, 3H), 2.08 (d, J=7.8 Hz, 2H), 5.04∼5.11 (m, 2H), 5.70∼5.84 (m, 1H);
¹³C-NMR (CDCl₃ δ) 4.7, 29.0, 118.0, 129.9;
²⁹Si-NMR (CDCl₃ δ) 28.1.

### Application Example 2

### (Preparation of allyl (isopropyl) dichlorosilane)

After adding 25 mL of 1,3-dimethyl-2-imidazolinone, 4.1 g of zinc powder and 10 g of isopropyl trichlorosilane to a 500-mL three-neck flask that had been subjected to a nitrogen purge and heating the mixture to 70°C, allyl chloride (4.2 g) was added in a dropwise manner over a period of 5 minutes. Upon termination of the dropwise addition, heating was conducted for another 4 hours and the product was subjected to distillation under reduced pressure, obtaining allyl methyl dichlorosilane with a 71% yield.

Analysis results: allyl (isopropyl) dichlorosilane:
bp 67∼70°C/33 mmHg;
Colorless transparent liquid;
MS (70 eV) m/e (%) 184 (M⁺ +2, 6.2), 182 (M⁺, 10.0), 141 (M⁺ -41, 23.4), 113 (100);
¹H-NMR (CDCl₃ δ) 1.11 (d, J=7.1 Hz, 6H), 1.25∼1.34 (m, 1H), 2.08 (d, J=7.8 Hz, 2H), 5.0∼5.11 (m, 2H), 5.71∼5.85 (m, 1H);
¹³C-NMR (CDCl₃ δ) 16.4, 18.6, 26.1, 117.8, 130.0;
²⁹Si-NMR (CDCl₃ δ) 30.7.

### Application Example 3

### (Preparation of allyl (n-hexyl) dichlorosilane)

After adding 18.3 mL of 1,3-dimethyl-2-imidazolinone and 6.5 g of zinc powder, as well as 17.6 g of n-hexyl trichlorosilane and 6.6 g of allyl chloride in a 500-mL three-neck flask that had been subjected to a nitrogen purge and heating the mixture at 70°C for 2 hours, the product was distilled under reduced pressure, obtaining allyl (n-hexyl) dichlorosilane with a 60% yield.

Analytic results: allyl (n-hexyl) dichlorosilane:
bp 80∼85°C/7 mmHg;
Colorless transparent liquid;
MS (70 eV) m/e (%) 226 (M⁺ +2, 4.0), 224 (M⁺, 5.9), 183 (M⁺ -41, 18.8), 43 (100);
¹H-NMR (CDCl₃ δ) 0.87 (t, J=6.6 Hz, 3H), 1.06∼1.12 (m, 2H), 1.24∼1.37 (bs, 6H), 1.47 (q, J=5.9 Hz, 2H), 2.06 (d, J=7.8 Hz, 2H), 5.03-5.09 (m, 2H), 5.68-5.83 (m, 1H);
¹³C-NMR (CDCl₃ δ) 14.4, 19.9, 22.6, 22.9, 27.9, 31.7, 32.5, 117.9, 130.0;
²⁹Si-NMR (CDCI₃ δ) 28.6.

### Application Example 4

### (Preparation of allyl (phenyl) dichlorosilane)

After adding 18.3 mL of 1,3-dimethyl-2-imidazolinone, 5.8 g of zinc powder and 17.0 g of phenyl trichlorosilane to a 500-mL three-neck flask that had been subjected to a nitrogen purge and heating the mixture to 70°C, allyl chloride (6.14 g) was added in a dropwise manner over a period of 15 minutes. Upon termination of the dropwise addition, heating was conducted for another 4 hours and the product was distilled under reduced pressure, obtaining allyl (phenyl) dichlorosilane with a 58% yield.

Analytic results: allyl (phenyl) dichlorosilane:
bp 86∼90°C/7 mmHg;
Colorless transparent liquid;
MS (70 eV) m/e (%) 218 (M⁺ +2, 9.3), 216 (M⁺, 14.1), 175 (M⁺ -41, 100);
¹H-NMR (CDCl₃ δ) 2.27 (d, J=7.7 Hz, 2H), 4.93∼5.06 (m, 2H), 5.67∼5.81 (m, 1H), 7.30∼7.77 (m, 5H);
¹³C-NMR (CDCl₃ δ) 28.2, 118.5, 128.7, 129.5, 132.2, 133.7, 162.4;
²⁹Si-NMR (CDCl₃ δ) 14.1.

### Application Example 5

### (Preparation of allyl (n-octyl) dichlorosilane)

After adding 40 mL of 1,3-dimethyl-2-imidazolinone, 6.2 g of zinc powder, as well as 19.4 g of n-octyl trichlorosilane and 6.0 g of allyl chloride in a 500-mL three-neck flask that had been subjected to a nitrogen purge, heating was conducted for 4 hours at 70°C. The product was distilled under reduced pressure, obtaining allyl. (n-octyl) dichlorosilane with a 68% yield.

Analytic results: allyl (n-octyl) dichlorosilane:
bp 60∼65°C/0.05 mmHg;
Colorless transparent liquid;
MS (70 eV) m/e (%) 254 (M⁺ +2, 1.1), 252 (M⁺, 1.7), 45 (100);
¹H-NMR (CDCl₃ δ) 0.86 (t, J=6.9 Hz, 3H), 1.06∼1.12 (m, 2H), 1.25∼1.36 (bs, 10H), 1.47 (q, J=5.9 Hz, 2H), 2.06 (d, J=7.8 Hz, 2H), 5.02-5.10 (m, 2H), 5.69∼5.83 (m, 1H);
¹³C-NMR (CDCl₃ δ) 14.5, 19.9, 22.6, 23.1, 27.9, 29.4, 29.5, 32.2, 32.8, 117.9, 130.0;
²⁹Si-NMR (CDCl₃ δ) 28.6.

### Application Example 6

### (Preparation of allyl (n-decyl) dichlorosilane)

After adding 35 mL of 1,3-dimethyl-2-imidazolinone, 5.5 g of zinc powder, as well as 19.3 g of n-decyl trichlorosilane and 5.4 g of allyl chloride in a 500-mL three-neck flask that had been subjected to a nitrogen purge, heating was conducted for 4 hours at 70°C. The product was distilled under reduced pressure, obtaining allyl (n-decyl) dichlorosilane with a 74% yield.

Analytic results: allyl (n-decyl) dichlorosilane:
bp 79∼84°C/0.05 mmHg;
Colorless transparent liquid;
MS (70 eV) m/e (%) 282 (M⁺ +2, 2.0), 280 (M⁺, 3.0), 45 (100);
¹H-NMR (CDCl₃ δ) 0.86 (t, J= 6.9 Hz, 3H), 1.06∼1.12 (m, 2H), 1.25∼1.36 (bs, 14H), 1.47 (q, J=6.1 Hz, 2H), 2.07 (d, J=7.8 Hz, 2H), 5.03∼5.09 (m, 2H), 5.69∼5.83 (m, 1H);
¹³C-NMR (CDCI₃ δ) 14.5, 19.9, 22.6, 23.1, 27.9, 29.5, 29.7, 29.8, 30.0, 32.3, 32.8, 117.9, 130.0;
²⁹Si-NMR (CDCI₃ δ) 28.5.

### Application Example 7

### (Preparation of diallyl (methyl) chlorosilane)

After adding 40 mL of 1,3-dimethyl-2-imidazolinone, 5.4 g of zinc powder, and 11.6 of g allyl (methyl) dichlorosilane in a 500-mL three-neck flask that had been subjected to a nitrogen purge and heating the mixture to 70°C, allyl chloride (5.7 g) was added in a dropwise manner over a period of 10 minutes. Upon termination of the dropwise addition, heating was conducted for another 2 hours and the product was distilled under reduced pressure, obtaining diallyl methyl chlorosilane with a 51% yield.

Analytic results: diallyl (methyl) chlorosilane:
bp 66∼70°C/43 mmHg;
Colorless transparent liquid;
GC-MS (70 eV) m/e (%) 162 (M⁺ +2, 2.5), 160 (M⁺, 6.2), 119 (M⁺ -41, 100);
¹H-NMR (CDCl₃ δ) 0.39 (s, 3H), 1.83 (d, J=8.0 Hz, 4H), 4.94∼5.00 (m, 4H), 5.70∼5.84 (m, 2H);
¹³C-NMR (CDCl₃ δ) -0.7, 24.9, 116.1, 132.2;
²⁹Si-NMR (CDCl₃ δ) 25.2.

### Application Example 8

### (Preparation of allyl dimethyl chlorosilane)

After adding 40 mL of 1,3-dimethyl-2-imidazolinone, 5.7 g of zinc powder, and 10.4 g of dimethyl dichlorosilane in a 500-mL three-neck flask that had been subjected to a nitrogen purge and heating the mixture to 70°C, allyl chloride (6.2 g) was added in a dropwise manner over a period of 15 minutes. Upon termination of the dropwise addition, heating was conducted for another 2 hours and the product was distilled under reduced pressure, obtaining allyl dimethyl chlorosilane with a 51% yield.

Analytic results: allyl dimethyl chlorosilane:
bp 40∼43°C/71 mmHg;
Colorless transparent liquid;
MS (70 eV) m/e (%) 136 (M⁺ +2, 2.3), 134 (M⁺, 6.7), 93 (M⁺ -41, 100);
¹H-NMR (CDCl₃ δ) 0.40 (s, 6H), 1.81 (d, J=8.0 Hz, 2H), 4.92∼4.98 (m, 2H), 5.70-5.84 (m, 1H);
¹³C-NMR (CDCl₃ δ) 1.5, 26.9, 115.7, 132.5;
²⁹Si-NMR (CDCl₃ δ) 28.3.

### Application Example 9

### (Preparation of allyl trimethyl silane)

After adding 100 mL of 1,3-dimethyl-2-imidazolinone, 13.8 g of zinc powder, and 21.8 g of trimethyl chlorosilane to a 500-mL three-neck flask that had been subjected to a nitrogen purge and heating the mixture to 70°C, allyl chloride (16.0 g) was added in a dropwise manner over a period of 5 minutes. Upon termination of the dropwise addition, heating was conducted for another 2 hours and the product was distilled under reduced pressure, obtaining allyl trimethyl silane with a 63% yield.

Analytic results: allyl trimethyl silane:
Colorless transparent liquid;
bp 81∼85°C;
MS (70 eV) m/e (%) 114 (M⁺, 5.0), 99 (7.5), 73 (100);
¹H-NMR (CDCl₃ δ) 0.01 (s, 9H), 1.49 (d, J=8.1 Hz, 2H), 4.78∼4.85 (m, 2H), 5.70∼5.84 (m, 1H);
¹³C-NMR (CDCl₃ δ) -1.7, 25.1, 112.9, 135.6;
¹⁹Si-NMR (CDCl₃ δ) 0.6.

### Effects of the Invention

The present invention makes it possible to easily, with high selectivity, high yields, and without using solvents or reagents that are difficult to handle industrially, prepare organic silane compounds with allyl-functional groups, such as allyl groups, crotyl groups and methallyl groups, which are important as organic synthesis reagents or as raw materials for silicones, by means of using industrially available chlorosilane compounds and halogenated allyls, 3-halogeno-1-butenes, 3-halogeno-2-methyl-1-propenes and metallic zinc as raw materials.

## Claims

1. A method for preparing an allylic silane compound, said method comprising reacting
(A) a chlorosilane of the formula
RₙSiCl₄₋ₙ
wherein R is independently selected from a hydrogen atom, saturated hydrocarbon group having 1 to 20 carbon atoms and an unsaturated hydrocarbon group having 1 to 20 carbon atoms and n is an integer having a value of 0 to 3, with
(B) a halogenated allylic compound selected from halogenated allyl compounds, 3-halogeno-1-butene compounds and 3-halogeno-2-methyl-1-propene compounds,
said reaction being carried out in an aprotic dipolar organic solvent in the presence of metallic zinc.

2. A method according to claim 1, wherein R is an alkyl group having 1 to 10 carbon atoms.

3. A method according to claim 1 to 2, wherein said halogenated allylic compound (B) is selected from allyl chloride, allyl bromide, allyl iodide, 3-chloro-1-butene, 3-bromo-1-butene, 3-iodo-1-butene, 3-chloro-2-methyl-1-propene, 3-bromo-2-methyl-1-propene and 3-iodo-2-methyl-1-propene.

4. A method according to any of claims 1 to 3, wherein said halogenated allylic compound (B) is allyl chloride.

5. A method according to any of claims 1 to 4, wherein said solvent is 1,3-dimethyl-2-imidazolidinone.

6. A method according to any of claims 1 to 5, wherein said chlorosilane (A) is selected from methyltrichlorosilane, hexyltrichlorosilane, octyltrichlorosilane, decyltrichlorosilane, allylmethyldichlorosilane, dimethyldichlorosilane and trimethylchlorosilane.
